# EUROPÄISCHE PATENTSCHRIFT

(11) **EP 0 520 187 B1**
(45) Veröffentlichungstag und Bekanntmachung des Hinweises auf die Patenterteilung: **28.12.1994**
(21) Anmeldenummer: 92108553.6
(22) Anmeldetag: 21.05.1992
(51) Int. Cl.: B60G 7/02

(54) **Radial und axial belastbares Drehgleitlager für Fahrwerksteile in Kraftfahrzeugen**
Sliding and rotating bearing for radial and axial forces for suspension elements of motor vehicles
Palier de rotation et translation reprenant des efforts axiaux et ratiaux pour éléments de suspension de véhicules à moteur

(30) Priorität: 24.06.1991 DE 4120772
(43) Veröffentlichungstag der Anmeldung: 30.12.1992
(73) Patentinhaber: LEMFOERDER METALLWAREN AG., D-49441 Lemförde (DE)
(72) Erfinder: Schmidt, Elisabeth, W-2844 Lemförde (DE); Kramer, Klaus, W-2846 Neuenkirchen (DE)
(74) Vertreter: Bruse, Willy Hans Heinrich

(56) Entgegenhaltungen:
- EP-A- 0 182 480
- EP-A- 0 317 727
- EP-A- 0 373 307
- EP-A- 0 373 307
- DE-A- 2 365 798
- DE-A- 3 800 314
- DE-C- 3 804 886
- GB-A- 2 202 923

## Beschreibung

Die Erfindung betrifft ein radial und axial belastbares Drehgleitlager für Fahrwerksteile in Kraftfahrzeugen nach dem Oberbegriff des Patentanspruches 1.

Die EP-A-373307 beschreibt ein radial und axial belastbares Drehgleitlager für Fahrwerksteile in Kraftfahrzeugen, bei dem eine starre Innenbuchse drehbar in einer Außenbuchse und diese in einem darauf festhaftenden ersten Elastomerkörper angeordnet ist und die Innenbuchse an einem axial äußeren Ende eine Axiallagerfläche an einem radial gerichteten Flanschvorsprung aufweist, wobei die korrespondierende, der Außenbuchse zugeordnete Axiallagerfläche an einer axial elastisch gegen einen zweiten Elastomerkörper abgestützten Gleitscheibe ausgebildet ist und zwischen dem Flanschvorsprung der Innenbuchse und dem benachbarten Ende der Außenbuchse ein ringförmiges Axiallager von der Gleitscheibe, dem zweiten Elastomerkörper und einem Ring gebildet wird.

Aus der DE 38 04 886 - C2 ist ein solches, vor allem für Radlenker bestimmtes Lager bekannt, bei dem eine Außenbuchse aus Gummimetall mit ihrer inneren Metallhülse unmittelbar auf der äußeren Gleitfläche der Innenbuchse angeordnet und mit dem äußeren Gummikörper in ein Lagerauge des Kraftfahrzeugteiles eingesetzt ist. Die Innenbuchse weist einseitig einen sich radial erstreckenden Flanschvorsprung mit einer axialen Lagerfläche auf, deren axiale Gegenfläche an einer Gleitscheibe ausgebildet ist, die sich axial gegen den die Axiallagerflächen außenseitig umgreifenden Gummikörper elastisch abstützt. Solche Drehgleitlager werden paarweise in spiegelbildlich versetzter Lage eingebaut und durch einen die Innenbuchsen durchgreifenden Bolzen gegeneinander verspannt. Aus dieser Druckschrift sind auch Gleitflächen mit einer Beschichtung aus Polytetrafluoräthylen (PTFE) bekannt.

Die EP-A-0 487 891 (stand der Technik nach Art. 54(3)EPÜ) offenbart eine Anordnung, bei der die Außenbuchse und der dieser zugeordnete radiale Flanschvorsprung durch ein an beiden festhaftendes Zwischenglied miteinander verbunden sind, so daß das Lager mit einer axialen Federcharakteristik ausgebildet werden kann, die von der radialen Federcharakteristik unabhängig ist.

Aufgabe der Erfindung ist demgegenüber die Ausbildung eines radial und axial belastbaren Drehgleitlagers der eingangs genannten Gattung mit voneinander unabhängiger radialer und axialer Federcharakteristik in der Weise, daß möglichst viele Bauteile für den Aufbau eines Drehgleitlagers mit unterschiedlicher einseitiger und beidseitiger axialer Dämpfung verwendbar sind, um die Herstellungskosten ohne Beeinträchtigung der elastischen Eigenschaften und größtmöglicher Option für Variationen gering zu halten.

Die Erfindung löst diese Aufgabe durch Ausbildungsmerkmale nach dem Patentanspruch 1.

Durch diese Merkmale wird eine getrennte Ausbildung der radial einfedernden und der axial einfedernden Bauteile erreicht, so daß die Federcharakteristik in axialer Richtung von der Federcharakteristik in radialer Richtung abweichen kann. Die Außenbuchse, der Elastomerkörper und weitere Bauteile sind auch für Drehgleitlager ohne axiale Dämpfung verwendbar, womit ein erheblicher Rationalisierungsvorteil in der Fertigung erreicht wird. Von besonderem Vorteil ist es, daß ein solches Lager fertig montiert angeliefert und dann eingebaut werden kann.

Gegenüber der dem Erfindungsgegenstand nächstliegenden Anordnung nach EP-A-37 33 07 ist das ringförmige Axiallager ein vorgefertigtes Bauteil, wobei der Ring ein auf dem benachbarten Ende der Außenbuchse eingesetzter Klemmring ist.

Bevorzugt wird eine Ausbildung, bei der die Gleitscheibe und der Klemmring durch den zweiten Elastomerkörper verbunden sind, der an beiden festhaftet und in der Form eines Stützringes ausgebildet ist. Eine solche Ausbildung hat den Vorteil, daß das Axiallager als ein getrenntes Bauteil hergestellt und in Anpassung an die auf das Lager einwirkenden Betriebsbedingungen gestaltet werden kann. Dies ermöglicht Drehgleitlager mit unterschiedlicher axialer Federcharakteristik durch den Einsatz von Axiallagern mit unterschiedlichen Eigenschaften unter Verwendung sonst gleichbleibender Bauteile. Ein besonderer Vorteil besteht darin, daß bei Drehgleitlagern mit beiderseitigem Axiallager unterschiedliche axiale Federcharakteristiken auf beiden Lagerseiten durch Verwendung von Axiallagern mit unterschiedlichen Eigenschaften erreicht werden können.

Zur Erzielung einer möglichst einfachen Ausbildung und Montage wird der Klemmring des im übrigen getrennt hergestellten Axiallagers auf das benachbarte rohrförmige Ende der Außenbuchse mit einer komplementär profilierten Stufenausnehmung aufgesetzt, womit bei der Montage selbsttätig eine Zentrierung für den richtigen Sitz des Axiallagers erreicht wird.

Ein weiterer Vorteil besteht darin, daß die Radiallagerflächen des Axiallagers durch einen Dichtungsbalg abgedeckt werden können, dessen eines Ende auf der Innenbuchse außerhalb der Radiallagerflächen und dessen anderes Ende am Umfang des Klemmringes befestigt ist. Dadurch wird die Herstellung des für die axiale Einfederung bestimmten Elastomerkörpers erheblich vereinfacht.

Die Anwendung der Erfindungsmerkmale ist für Drehgleitlager mit einseitiger und beidseitiger axialer Dämpfung geeignet.

Auf der Zeichnung sind Ausführungsbeispiele dargestellt. Es zeigen:
- Figur 1: ein Drehgleitlager mit einem Axiallager auf beiden Lagerseiten in der unteren Hälfte in Ansicht und in der oberen Hälfte im Längsschnitt,
- Figur 2: ein Drehgleitlager mit einem einseitigen Axiallager in der unteren Hälfte in Ansicht und in der oberen Hälfte im Längsschnitt und
- Figur 3: in einem gegenüber den Figuren 1 und 2 vergrößerten Maßstab eine Axiallagerausbildung in der unteren Hälfte in Ansicht und in der oberen Hälfte im Schnitt.

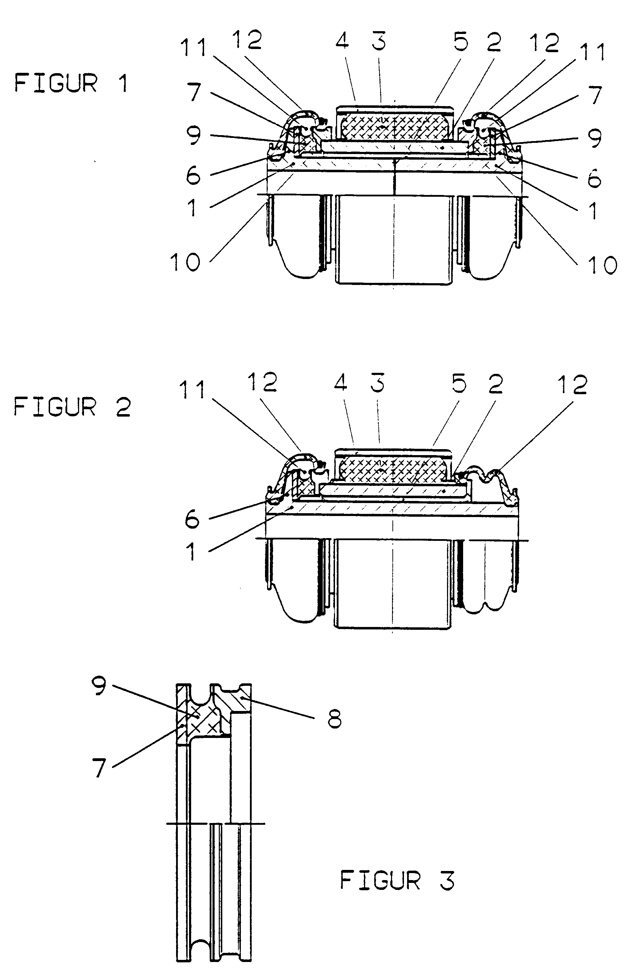

Bei den in den Figuren 1 und 2 dargestellten Ausführungsbeispielen besteht der radial wirksame Lagerteil aus der Innenbuchse 1 und der Außenbuchse 2. Die Außenbuchse 2 ist innerhalb eines ersten Elastomerkörpers 3 angeordnet, welcher in eine Aufnahmebuchse 4 festhaftend eingesetzt ist. Zur Verbesserung der Gleiteigenschaften ist in der Außenbuchse 2 eine Gleitbuchse 5 angeordnet, deren Innenfläche, welche gegebenenfalls zur Verbesserung der Gleiteigenschaften eine Beschichtung aufweist, in unmittelbarem Kontakt mit der Gegengleitfläche am Außenmantel der Innenbuchse 1 steht. An die Außenbuchse schließt sich im Beispiel der Figur 1 an beiden Enden und im Beispiel der Figur 2 an nur einem Ende ein Axiallager an, welches in der Figur 3 in einem vergrößerten Maßstab dargestellt ist. Das Axiallager wirkt mit einem sich radial erstreckenden Flanschvorsprung 6 der Innenbuchse 1 zusammen, so daß diese Innenbuchse 1 bei beidseitiger Anordnung eines Axiallagers entsprechend Figur 1 geteilt sein muß, um die Montage der Innenbuchse 1 von beiden Außenseiten her zu ermöglichen. Ein auf der Zeichnung nicht dargestellter Bolzen durchgreift die Innenbuchse und verspannt beide Teile miteinander. Das Axiallager entsprechend Figur 3 besteht aus einer Gleitscheibe 7 und einem Klemmring 8, die beide durch einen zweiten, als Stützring ausgebildeten Elastomerkörper 9 festhaftend miteinander verbunden sind. Die Gleitscheibe 7 bildet auf der Außenseite eine Axiallagerfläche, die mit der Axiallagerfläche am Flanschvorsprung 6 der Innenbuchse 1 zusammenwirkt. Der Klemmring 8 ist bei der Montage auf das benachbarte Rohrende der Außenbuchse 2 mit einer stufenförmigen Ausnehmung aufpreßbar und wird dadurch selbsttätig zentriert. Nach der Montage des Axiallagers auf einer Seite oder auf beiden Seiten wird die Innenbuchse bzw. werden die beiden Innenbuchsen eingeschoben. Die Längenabstimmung der Außenbuchse mit den aufgepreßten Axiallagern und den beiden Innenbuchsen muß eine geringe Vorspannung bei der Montage ergeben. Hierdurch wird ein stetiger Kennlinienverlauf ohne Spiel im Nulldurchgang bei axialem Lastwechsel erreicht. Durch den Längenausgleich ist es nicht erforderlich, die Bauteiltoleranzen besonders einzuschränken. Bei axialer Belastung wird das auf Druck belastete Axiallager entsprechend der Federcharakteristik eine axiale Bewegung der Innenbuchse 1 ermöglichen. Zwischen der Gleitbuchse 5 und den Innenbuchsen 1 kommt es zu einer axialen Gleitbewegung. Die axiale Steifigkeit des Elastomerkörpers 3 kommt nicht zur Wirkung. Das dem Lastangriff gegenüberliegende Axiallager hebt nach dem Abbau der axialen Verspannung von der Axiallagerfläche des Flanschvorsprunges 6 ab. Die axiale Federrate wird somit nur durch die Steifigkeit des druckbelasteten Axiallagers bestimmt. Die durch die Einfederung des Axiallagers hervorgerufene Volumenverlagerung wird durch den Freiraum 10 zwischen der Innenbuchse 1 und dem Stützring 9 bzw. dem Klemmring 8 ermöglicht. Eine deutliche Erhöhung der Axialfederrate des Axiallagers kann durch eine ringsumlaufende Ausnehmung 11 erreicht werden, deren seitliche Begrenzungen sich nach einer vorbestimmten axialen Verlagerung berühren und als Anschlag wirksam sind. Das Eintreten von Schmutz in die Lagerflächen wird an beiden Lagerenden durch einen Dichtungsbalg 12 verhindert, der mit dem einen Ende in einer ringförmigen Ausnehmung der Innenbuchse 1 und mit dem anderen Ende in einer ringförmigen Ausnehmung des Klemmringes 8 bzw. unmittelbar auf dem Ende der Außenbuchse 2 befestigt ist. Dieser Dichtungsbalg 12 übergreift das Axiallager und insbesondere die sich berührenden Axiallagerflächen, so daß die Befestigung auf der Innenbuchse außerhalb des radial gerichteten Flanschvorsprunges erfolgt. Die Befestigung der Balgenden kann durch bekannte Mittel gesichert sein.

| BEZUGSZEICHENLISTE: | | | |
|---|---|---|---|
| 1 | Innenbuchse | 7 | Gleitscheibe |
| 2 | Außenbuchse | 8 | Klemmring |
| 3 | Elastomerkörper | 9 | Elastomerkörper |
| 4 | Aufnahmebuchse | 10 | Freiraum |
| 5 | Gleitbuchse | 11 | Ausnehmung |
| 6 | Flanschvorsprung | 12 | Dichtungsbalg |

## Patentansprüche

1. Radial und axial belastbares Drehgleitlager für Fahrwerksteile in Kraftfahrzeugen, bei dem eine starre Innenbuchse (1) drehbar in einer Außenbuchse (2) und diese in einem darauf festhaftenden ersten Elastomerkörper (3) angeordnet ist, wobei die Innenbuchse (1) an wenigstens einem axial äußeren Ende eine Axiallagerfläche an einem radial gerichteten Flanschvorsprung (6) aufweist und dem benachbarten Ende der Außenbuchse (2) eine Axiallagerfläche an einer axial elastisch gegen einen zweiten Elastomerkörper (9) abgestützten Gleitscheibe (7) zugeordnet ist, dadurch gekennzeichnet, daß zwischen dem Flanschvorsprung (6) der Innenbuchse (1) und dem benachbarten Ende der Außenbuchse (2) ein ringförmiges Axiallager eingesetzt ist, welches aus der Gleitscheibe (7) und einem auf dem benachbarten Ende der Außenbuchse (2) befestigten Klemmring (8) besteht, die beide durch den zweiten Elastomerkörper (9) zu einem vorgefertigten, axial und radial elastischen Bauteil miteinander verbunden sind.

2. Drehgleitlager nach Anspruch 1, dadurch gekennzeichnet, daß die Gleitscheibe (7) und der Klemmring (8) durch den an beiden festhaftenden und als Stützring ausgebildeten zweiten Elastomerkörper (9) verbunden sind.

3. Drehgleitlager nach Anspruch 1 und 2, dadurch gekennzeichnet, daß der Klemmring (8) auf das benachbarte rohrförmige Ende der Außenbuchse (2) mit einer komplementär profilierten Stufenausnehmung aufgepreßt ist.

4. Drehgleitlager nach den Ansprüchen 1 bis 3, dadurch gekennzeichnet, daß ein die Axiallagerflächen übergreifender Dichtungsbalg (12) mit seinem einen Ende außerhalb der Axiallagerflächen auf der Innenbuchse (1) und mit seinem anderen Ende am Umfang des Klemmringes (8) befestigt ist.

5. Drehgleitlager nach Anspruch 4, dadurch gekennzeichnet, daß der Dichtungsbalg (12) bei einseitiger Anordnung des Axiallagers auf der anderen Lagerseite mit seinem inneren Ende auf dem benachbarten Ende der Außenbuchse (2) gleitend anliegt.

## Claims

1. Pivot slide bearing which can take radial and axial loads for chassis parts in motor vehicles, in which a rigid inner bush (1) is rotatably arranged in an outer bush (2) and the latter is arranged in a first elastomer body (3), which adheres to the outer bush, the inner bush (1) comprising a thrust bearing face at a radially directed flange projection (6), at least at one axially outer end, and a thrust bearing face at a slide disc (7), which is supported against a second elastomer body (9) in an axially elastic manner, being associated with the adjacent end of the outer bush (2), characterised in that an annular thrust bearing is inserted between the flange projection (6) of the inner bush (1) and the adjacent end of the outer bush (2), which bearing consists of the slide disc (7) and a clamping ring (8), which is secured to the adjacent end of the outer bush (2), the two being connected together by the second elastomer body (9) to form a prefabricated, axially and radially elastic component.

2. Pivot slide bearing according to claim 1, characterised in that the slide disc (7) and the clamping ring (8) are connected by the second elastomer body (9), which adheres to them both and is formed as a support ring.

3. Pivot slide bearing according to claims 1 and 2, characterised in that the clamping ring (8) is pressed onto the adjacent tubular end of the outer bush (2) by way of a stepped recess of a complementary profile.

4. Pivot slide bearing according to claims 1 to 3, characterised in that a sealing bellows (12), which engages over the thrust bearing faces, is secured at one end to the inner bush (1) outside of the thrust bearing faces and at its other end to the circumference of the clamping ring (8).

5. Pivot slide bearing according to claim 4, characterised in that, with the thrust bearing arranged unilaterally on the other bearing side, the sealing bellows (12) rests in a sliding manner via its inner end on the adjacent end of the outer bush (2).

## Revendications

1. Palier lisse de rotation, pour partie de châssis de véhicule automobile et agencé de façon à pouvoir être soumis à des efforts radiaux et à des efforts axiaux, dans lequel un manchon intérieur rigide (1) est monté rotatif dans un manchon extérieur (2) et ce manchon extérieur est monté dans un premier corps en élastomère (3) adhérant à demeure sur ce manchon extérieur, tandis qu'à au moins une extrémité extérieure axiale, le manchon intérieur (1) comporte une surface de palier de butée qui est située sur une partie en saillie en forme de collerette (6) orientée radialement et qu'a l'extrémité voisine du manchon extérieur (2), il est associé une surface de palier de butée réalisée sur un disque de glissement (7) oui prend appui élastiquement suivant la direction axiale contre un second corps en élastomère (9), caractérisé en ce qu'entre la partie en saillie en forme de collerette (6) du manchon intérieur (1) et l'extrémité voisine du manchon extérieur (2), il est placé un palier de butée annulaire qui est constitué du disque de glissement (7) et d'un anneau de serrage (8), fixé sur l'extrémité voisine du manchon extérieur (2), ce disque de glissement et cet anneau de serrage étant réunis entre eux au moyen d'un second corps en élastomère (9) de façon à former une pièce préassemblée à élasticité axiale et à élasticité radiale.

2. Palier lisse de rotation selon la revendication 1, caractérisé en ce que le disque de glissement (7) et l' anneau de serrage (8) sont réunis au moyen du second corps en élastomère (9) qui adhère à demeure sur l'un et l'autre et qui est réalisé sous la forme d'un anneau d'appui.

3. Palier lisse de rotation selon l'une des revendications 1 et 2, caractérisé en ce que l'anneau de serrage (8) est emboîté à force sur l'extrémité tubulaire voisine du manchon extérieur (2) au moyen d'un évidement étagé ayant une forme profilée complémentaire.

4. Palier lisse de rotation selon l'une des revendications 1 à 3, caractérisé en ce qu'un soufflet d'étanchéité (12) recouvrant les surfaces de butée axiale est fixé par une première extrémité à l'extérieur des surfaces de palier de butée sur le manchon intérieur (1) et par la seconde extrémité sur le contour périphérique de l'anneau de serrage (8).

5. Palier lisse de rotation selon la revendication 4, caractérisé en ce que, dans le cas d'un agencement du palier de butée d'un seul côté, le soufflet d'étanchéité (12) situé de l'autre côté du palier prend appui d'une manière coulissante, par son extrémité intérieure, sur l'extrémité voisine du manchon extérieur (2).
